# EUROPÄISCHE PATENTSCHRIFT

(11) **EP 1 752 322 B1**
(45) Veröffentlichungstag und Bekanntmachung des Hinweises auf die Patenterteilung: **12.01.2011**
(21) Anmeldenummer: 06123033.0
(22) Anmeldetag: 01.10.2002
(51) Int. Cl.: B60H 1/00

(54) **Verfahren zur Beheizung von Scheiben eines Kraftfahrzeuges sowie Feuchteregelung**
Method for the heating of motor vehicle windows as well as humidity control
Procédé de chauffage des vitres d'un véhicule automobile ainsi que régulation de l'humidité

(43) Veröffentlichungstag der Anmeldung: 14.02.2007
(62) Teilanmeldung aus: 02102403.9
(73) Patentinhaber: Ford Global Technologies, LLC, Dearborn, MI 48126 (US)
(72) Erfinder: Heinz, Uwe, 83026 Rosenheim (DE)
(74) Vertreter: Drömer, Hans-Carsten

(56) Entgegenhaltungen:
- EP-A- 0 718 165
- DE-A1- 2 130 571
- DE-A1- 3 624 170
- DE-A1- 3 721 659
- DE-A1- 4 426 736
- DE-A1- 19 722 577
- DE-A1- 19 723 858

## Beschreibung

Die Erfindung betrifft ein Verfahren zur Beheizung von Scheiben eines Kraftfahrzeuges, sowie eine Feuchteregelung.

Die Klimatisierung des Innenraumes eines Kraftfahrzeuges stellt viele verschiedenen Anforderungen an das Heizungs-Klima-Lüftungssystem. Im Sommer gilt es die Innenraumtemperatur auf ein komfortables Niveau zu kühlen, während im Winter ein schnelles Erwärmen und stabiles Halten der erreichten Temperatur des Innenraumes sehr zum Wohlbefinden der Insassen beiträgt. Eines der Probleme ergibt sich allerdings häufig dadurch, dass die in der Luft enthaltene Feuchtigkeit an den Scheiben kondensieren kann und so einen relativ undurchsichtigen Film auf den Scheiben, sogenannte beschlagene Scheiben, bildet. Bei entsprechenden ungünstigen Bedingungen gefriert die Feuchtigkeit sogar an den Scheiben. Dieser Kondensationsfilm oder die Eisschicht behindert die Sicht des Fahrers und sollte daher möglichst vermieden werden. Stand der Technik ist es dabei, die Temperatur der Scheiben zu erhöhen und/oder die Luft zu entfeuchten.

Zur Temperaturerhöhung wird üblicherweise erwärmte Luft insbesondere an die Front- und die vorderen Seitenscheiben geleitet. Diese Maßnahme zur Beschlagvermeidung wirkt sich üblicherweise negativ auf den Innenraumkomfort aus. Es werden auch elektrisch beheizbare Scheiben verwendet, bei denen stromdurchflossene dünne Widerstandsdrähte für die nötige Heizleistung zur Erwärmung der Scheibenfläche sorgen. Alle Scheiben eines Kraftfahrzeuges elektrisch zu beheizen scheitert in der Regel an der zu großen benötigten elektrischen Leistung, so dass üblicherweise nur die Heckscheibe, selten auch die Frontscheibe, elektrisch beheizt werden. Die Einschaltdauer der elektrischen Heizung ist deswegen häufig begrenzt und muss meist vom Kunden vorgenommen werden.

Zur Luftentfeuchtung wird in der Regel die Klimaanlage eines Kraftfahrzeuges eingesetzt. Dabei wird die Kondensation eines großen Teiles der in der Außenluft enthaltenen Luftfeuchtigkeit am Verdampfer ausgenutzt. Je nach Bedarf wird die Luft dann von der Kraftfahrzeugheizung auf die gewünschte Temperatur nachgeheizt.

Nachteilig ist es allerdings dabei, dass die erwärmte Luft generell sehr trocken ist, was wiederum zur Beeinträchtigung des Komforts für die Insassen führt. Außerdem tritt bei der Entfeuchtung der Luft mittels Klimaanlage das Problem auf, dass die Klimaanlage systembedingt nur über 0°C in Betrieb sein kann.

Bekannt ist es, auch aus der Wohnraumklimatisierung, dass der Mensch sich nur in einem bestimmten Temperaturbereich und in einem bestimmten relativen Luftfeuchtigkeitsbereich, dem sog. Behaglichkeitsfenster, komfortabel fühlt. Dies gilt auch für die Insassen von Kraftfahrzeugen. Allerdings ist hier die Luft häufig zu trocken, im Winter durch den ohnehin niedrigen Feuchtigkeitsgehalt der Außenluft und der Notwendigkeit der Erwärmung der Luft und im Sommer dadurch, dass die gebräuchlichen Klimaanlagen einen großen Teil der Luftfeuchtigkeit auskondensieren. Es ist daher wünschenswert für die Passagiere eines Kraftfahrzeuges eine Feuchteregelung für den Innenraum zu installieren. Es ist dabei gebräuchlich zur Erhöhung der Luftfeuchtigkeit im Innenraum die Umluftklappe zu benutzen/schließen. So eine Feuchteregelung erhöht allerdings die Beschlagneigung der Scheiben bei niedrigen Außentemperaturen erheblich. Beschlagfreiheit unter möglichst allen Bedingungen zu gewährleisten und gleichzeitig die Innenraumtemperatur und -feuchtigkeit im Behaglichkeitsfenster zu halten stehen also im Widerspruch.

Beispielhaft für den Stand der Technik zur Vermeidung des Beschlagens von Scheiben von Kraftfahrzeugen seien hier die US 6,155,061, die US 6,112,807 und die DE 195 40 566 genannt.

Bei der US 6,155,061 wird eine bekannte Heizungs-, Belüftungs- und Klimaanlage automatisch so gesteuert, dass ein Beschlagen der Scheiben vermieden wird. Zur Steuerung werden verschiedene Parameter herangezogen, wie Außen- und Innentemperatur, Vorhandensein von Regen, Fahrzeuggeschwindigkeit, etc. Aus diesen Parametern werden z. T. Parameter abgeleitet wie z. B. Beschlagneigung und relative Luftfeuchte. Entsprechend verschiedener Steuerungsprogramme werden dann das Gebläse, die Lüftungsklappen und/oder der Kältemittelkompressor aktiviert.

Bei der US 6,112,807 findet zusätzlich noch ein Feuchtesensor Verwendung, außerdem wird berücksichtigt, dass ein Klimaanlagenverdampfer vereisen kann und so keine Frischluft mehr in den Innenraum gelangen kann.

Die DE 195 40 566 verwendet neben den bekannten Heizungs- und Klimaanlagenbauteilen und Temperatur- und Feuchtesensoren Fuzzy-Regeln zur Ermittlung der Beschlagwahrscheinlichkeit und Regelung der Heizung-, Belüftungs- und Klimaanlage.

Die genannten Verfahren weisen jedoch den Nachteil auf, dass sie entweder nur die Front- und vorderen Seitenscheiben entfeuchten oder aber unter 0°C Außentemperatur nicht mehr in Betrieb genommen werden können. Außerdem ist eine Feuchte/Umluftregelung zur Schaffung eines Innenraumklimas im Behaglichkeitsfenster nicht oder nur sehr eingeschränkt durchführbar.

Aus US 5,325,912 ist es bekannt, zur Reduzierung des Energieverbrauchs beim Enteisen eines Elektrofahrzeuges mittels einer Glasheizvorrichtung ("glass heating device") eine Steuerung für diese einzusetzen, welche auch die von der Klimaanlage verbrauchte Leistung steuert, wobei eine Mehrzahl von Sensoren eingesetzt werden, zu denen auch ein an der vorderen Windschutzscheibe angebrachter Feuchtesensor gehört.

Aus DE 199 47 038 A1 sind ein Verfahren und eine Vorrichtung zur Belüftung mindestens einer Scheibe in einem Fahrzeug durch Anströmen und Ansaugen von Luft im Bereich der Scheibe bekannt.

Aus DE 101 22 532 A1 in ein Verfahren zur Klimaregelung in Kraftfahrzeugen und zur Vermeidung von Kondensation und Eisbildung auf der Innenseite der Windschutzscheibe bekannt, bei dem die Oberflächentemperatur und die Taupunkttemperatur an einem repräsentativen Ort, insbesondere in Nähe der Windschutzscheibe, gemessen und mit einstellbaren Vorgabewerten verglichen werden.

Die EP 0718165 A1 beschreibt eine Vorrichtung zur Beschlagfreihaltung der Scheiben eines Kraftfahrzeuges, welche die Möglichkeit der elektrischen Beheizung der Scheiben vorsieht, falls von Feuchtesensoren die Überschreitung eines Beschlaggrenzwertes ermittelt wird. Die Feuchtesensoren sind direkt an den Scheibenflächen von Front- und Heckscheibe angeordnet bzw. sogar mit diesen fest verbunden oder können auch in den Scheiben integriert sein. Zur Beschlagerkennung messen die Feuchtesensoren die Luftfeuchtigkeit direkt auf den Scheiben. Nachteilig ist, dass mehrere Sensoren angebracht werden müssen, um den Beschlag auf den Scheiben zu erkennen.

Aus der DE 19723858 A1 ist eine Vorrichtung zur Beschlagerkennung bekannt, bei der eine elektrische Beheizung der Scheiben erst erfolgt, wenn Sensoren einen Beschlag detektieren. Auch hier wird je ein Sensor für die Windschutzscheibe und für die Heckscheibe verwendet. Bei dem Sensor, der an der Innenseite der Windschutzscheibe angebracht ist, handelt es sich um einen optischen Sensor, der Beschlag, aber auch Verschmutzung, aufgrund der Trübung der Scheibe erkennt. Der Sensor, der für die Heckscheibe vorgesehen ist, ist ein resistiver Sensor, der in die Heckscheibe eingebettet ist und demnach nicht im Innenraum angeordnet ist. Zudem nutzt der Sensor eine sprunghafte Änderung seines ohmschen Widerstandes, wenn sich durch die Benetzung der Scheibe, deren Isolationswirkung verändert. Auch hier messen beide Sensoren zur Beschlagerkennung nicht die Luftfeuchtigkeit der Innenraumluft, so dass für die Erkennung des Beschlags auf den einzelnen Scheiben mehrere Sensoren notwendig sind.

In der DE3624170 ist ein weiteres Verfahren zum Betreiben einer Heiz- und Klimaanlage bekannt. Feuchtesensoren im Ansaugkanal und im Fahrzeuginnenraum ermöglichen es, die Luftfeuchtigkeit im Fahrzeuginnenraum zu regeln. Auch hier sind mehrere Feuchtesensoren erforderlich, um den Beschlag auf den Scheiben zu erkennen und zu regeln.

Aus der DE 19722577 ist eine Vorrichtung zur Beschlagerkennung bekannt, bei der eine Anordnung im Fahrzeuginnenraum zum Erfassen der Temperatur und der Luftfeuchtigkeit vorhanden ist, und die über Kennfelder der Taupunkttemperatur die Heizungsregelung steuert. Hier sind zusätzliche Temperatursensoren an den Scheiben erforderlich, um eine Beschlagsneigung festzustellen.

Durch die vorliegende Erfindung wird ein Verfahren zur Beheizung von Scheiben eines Kraftfahrzeuges geschaffen, wobei zur Bestimmung und Regelung der Heizleistung die Luftfeuchtigkeit im Innenraum des Kraftfahrzeuges unter Nutzung des Feuchtesensors einer Feuchteregelung herangezogen wird, wobei ein heckseitig eingebauter Feuchtesensor benutzt wird. Hierdurch wird es ermöglicht, den tatsächlichen Feuchtegehalt der Innenraumluft möglichst gut zu bestimmen, da sich die Luft beim Durchströmen des Innenraumes in der Regel mit Feuchtigkeit anreichert.

Ein oder mehrere Feuchtesensoren messen bei dem Verfahren die Luftfeuchtigkeit im Innenraum des Kraftfahrzeugs. Daraus und anhand von eingehenden Sensorsignalen lassen sich Rückschlüsse auf die Beschlagneigung der Scheiben ziehen, und die Heizung kann dementsprechend geregelt werden. Denkbar ist auch eine Variante bei der die Feuchtesensoren in eine elektrische Heizung integriert sind (beschrieben in der DE 44 26 736). So lassen sich alle Scheiben individuell bedarfsgerecht beheizen und der Stromverbrauch wird so niedrig wie möglich gehalten.

Gemäß einer weiteren Ausgestaltung wird bei der Beheizung der jeweiligen Scheibe nur soviel elektrische Energie zugeführt, wie tatsächlich zur Beschlagfreihaltung benötigt wird. Die individuelle, variable und bedarfsgerechte elektrische Beheizung der Scheiben gestattet ferner die Betreibung einer Umluftregelung zur Erhaltung des Behaglichkeitsfensters, auch wenn diese im Konflikt mit Scheibenbeschlag steht. Zudem sind weder Zugluft noch eine Erwärmung jenseits des Wohlbefindens notwendig. Eingesetzt werden können bestehende oder zukünftige automatische Klimasysteme, die feuchtegeregelte Klimakompressorregelungen zwecks Energieersparnis einsetzen. Fahrzeuge müssen nur um die Scheibenheizung und den notwendigen Regelalgorithmus erweitert werden.

Bei einer weiteren Ausgestaltung wird die benötigte Heizleistung für jede Scheibe nicht direkt bestimmt. Vielmehr werden Kennfelder herangezogen, die z. B. die Heizleistung für jede Scheibe in Abhängigkeit von Außen- und Innenraumtemperatur aber auch von Fahrgeschwindigkeit, Sonnenstand und Insassenanzahl festlegen.

Bei einer bevorzugten Ausbildung der Erfindung werden die Kennfelder zuvor in Fahrzeugversuchen mittels einer geeigneten Testroutine ("fogging resistance evaluation") bestimmt. Da die Beschlagneigung für jedes Fahrzeug und für jede Scheibe unterschiedlich ist, ist es sinnvoll, diese z. B. in Windkanalversuchen zu bestimmen. Dies trägt z. B. der unterschiedlichen Durchströmung des Innenraums bei unterschiedlichen Fahrzeugen und/oder unterschiedlichen Fahrbedingungen Rechnung. So können Kennfelder bestimmt werden, die z. B. ausgehend von der Außentemperatur, Sonnenlast und Fahrgeschwindigkeit sowie der Innenraumtemperatur und -feuchte die nötige Heizleistung für jede Scheibe vorgeben.

Denkbar ist auch eine Bestimmung der Scheibenoberflächentemperatur mittels CAE-Simuiation oder per Widerstandsmessung der vorhandenen Heizdrähte. So können dann die Scheiben individuell und bedarfsgerecht bestromt und erwärmt werden.

Für alle Varianten sind aber die genannten Sensorsignale und der oder die im Innenraum installierten Feuchtesensoren notwendig, um situationsgerecht die Erwärmung der Scheiben einzuleiten.

Vorteilhafte Ausgestaltungen sind in den Unteransprüchen enthalten.

Gemäß einem weiteren Aspekt wird ein Verfahren entwickelt, welches durch individuelles, variables und bedarfsgerechtes Beheizen aller Scheiben eines Kraftfahrzeuges ein Beschlagen der genannten Scheiben, insbesondere auch bei Vorhandensein einer Feuchteregelung, zuverlässig verhindert, und es wird eine Vorrichtung zur Durchführung dieses Verfahrens bereitgestellt.

Dieses Verfahren zur bedarfsgerechten Beheizung von Scheiben an Kraftfahrzeugen zeichnet sich dadurch aus, dass alle Scheiben eines Kraftfahrzeuges beheizbar sind. Die Heizquelle ist dabei beliebig, bevorzugt werden jedoch elektrisch beheizbare Scheiben. Die Beheizung aller Scheiben hat den Vorteil, dass bei allen Betriebszuständen eines Kraftfahrzeuges, insbesondere bei Einsatz einer Feuchteregelung, zuverlässig die Scheiben beschlagfrei gehalten werden.

Gemäß einer weiteren Ausgestaltung wird die Heizleistung der elektrischen Heizung regelbar ausgeführt. Dabei wird der jeweiligen Scheibe nur soviel elektrische Energie zugeführt, wie tatsächlich zur Beschlagfreihaltung benötigt wird. (Für eine Warmluftheizung lässt sich dies z. B. mit variablen Klappen und/oder regelbarem Gebläse ausführen.) Bei elektrisch beheizten Scheiben hat dies gegenüber den heutigen Front- und Heckscheibenheizungen den Vorteil, dass nur soviel elektrische Leistung benötigt wird, wie tatsächlich zur Beschlagfreihaltung erforderlich ist. Dies senkt den Gesamtbedarf an elektrischer Energie zur Beschlagfreihaltung ganz erheblich.

Ein weiterer Aspekt betrifft ein Heizungssystem für ein Kraftfahrzeug, welches zur Durchführung der genannten Verfahren geeignet ist. Dabei kann z. B. ein vorhandenes automatisches oder halbautomatisches Heizungssystem um die zur Durchführung des Verfahrens nötigen Luftkanäle erweitert werden. Die üblicherweise schon vorhandene Regelung wird dann z. B. durch die ermittelten Kennfelder ergänzt. Auch eine Kombination von Warmluft und elektrischer Heizung bieten sich hier an.

Im Folgenden wird die Erfindung anhand der einzigen Figur beispielhaft näher erläutert. Es zeigt:

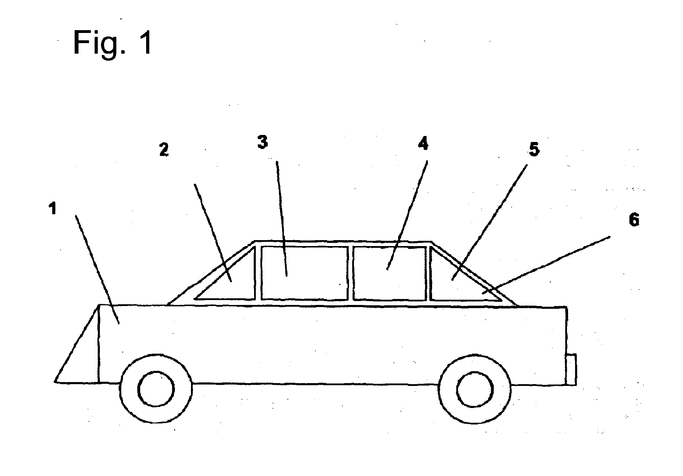

- Fig. 1: ein schematisch dargestelltes Kraftfahrzeug mit schematisch dargestell- ten Scheiben

Figur 1 zeigt schematisch ein Kraftfahrzeug 1 in der Seitenansicht mit vier Seitenscheiben 2, 3, 4, 5. Nicht dargestellt sind die Front- und Heckscheibe. Während üblicherweise nur die Front- und Heckscheibe elektrisch beheizbar sind, versorgt die Fahrzeugheizung die Seitenscheiben 2, 3 in der Regel mit Warmluft. Bei Bedarf werden alle Scheiben 2, 3, 4, 5 des Kraftfahrzeuges 1 beheizt, um ein Beschlagen der Scheiben 2, 3, 4, 5 und der Front- und Heckscheibe zu verhindern.

Position 6 zeigt den erfindungsgemäßen Einbauort für den Feuchtesensor. Dieser Einbauort liegt vorzugsweise in der Nähe der Abluftöffnungen, um den tatsächlichen Feuchtegehalt der Innenraumluft möglichst gut zu bestimmen, da sich die Luft beim Durchströmen des Innenraumes in der Regel mit Feuchtigkeit anreichert.

## Patentansprüche

1. Verfahren zur Beheizung von Scheiben (2,3,4,5) eines Kraftfahrzeuges (1), wobei zur Bestimmung und Regelung der Heizleistung die Luftfeuchtigkeit im Innenraum des Kraftfahrzeuges unter Nutzung eines Feuchtesensors einer Feuchteregelung herangezogen wird, wobei zur Feuchtigkeitsmessung im Innenraum des Fahrzeugs nur ein heckseitig eingebauter Feuchtesensor benutzt wird,
**dadurch gekennzeichnet, dass**
ein Feuchtesensor benutzt wird, dessen Einbauort in der Nähe der Abluftöffnungen des Kraftfahrzeuges liegt.

2. Verfahren zur Beheizung von Scheiben (2,3,4,5) eines Kraftfahrzeuges (1), wobei zur Bestimmung und Regelung der Heizleistung die Luftfeuchtigkeit im Innenraum des Kraftfahrzeuges unter Nutzung eines Feuchtesensors einer Feuchteregelung herangezogen wird, zur Feuchtigkeitsmessung im Innenraum des Fahrzeugs nur heckseitig eingebaute Feuchtesensoren benutzt werden,
**dadurch gekennzeichnet, dass**
ein Feuchtesensor benutzt wird, dessen Einbauort in der Nähe der Abluftöffnungen des Kraftfahrzeuges liegt.

3. Verfahren nach Anspruch 1 oder 2,
**dadurch gekennzeichnet, dass**
bei der Beheizung der jeweiligen Scheibe nur soviel elektrische Energie zugeführt wird, wie tatsächlich zur Beschlagfreihaltung benötigt wird.

4. Verfahren nach einem der Ansprüche 1 bis 3,
**dadurch gekennzeichnet, dass**
zur Ermittlung der Heizleistung Kennfelder oder Berechnungen herangezogen werden.

5. Verfahren nach Anspruch 4,
**dadurch gekennzeichnet, dass**
diese Kennfelder in Fahrzeugversuchen mittels einer geeigneten Testroutine bestimmt werden.

6. Feuchteregelung in einem Kraftfahrzeug mit einem Feuchtesensor, insbesondere zur Anwendung in einem Verfahren nach einem der vorhergehenden Ansprüche, wobei zur Feuchtigkeitsmessung im Innenraum des Fahrzeugs nur ein Feuchtesensor heckseitig eingebaut ist
**dadurch gekennzeichnet, dass**
der Einbauort eines Feuchtesensors in der Nähe der Abluftöffnungen des Kraftfahrzeuges liegt.

7. Feuchteregelung in einem Kraftfahrzeug mit einem Feuchtesensor, insbesondere zur Anwendung in einem Verfahren nach einem der vorhergehenden Ansprüche, wobei zur Feuchtigkeitsmessung im Innenraum des Fahrzeugs Feuchtesensoren nur heckseitig eingebaut sind,
**dadurch gekennzeichnet, dass**
der Einbauort eines Feuchtesensors in der Nähe der Abluftöffnungen des Kraftfahrzeuges liegt.

## Claims

1. Method for heating windows (2, 3, 4, 5) of a motor vehicle (1), wherein the air humidity in the passenger compartment of the motor vehicle is used to determine and control the heating power by employing a humidity sensor of a humidity control system, wherein just one humidity sensor which is installed at the rear is used to measure the humidity in the passenger compartment of the vehicle,
**characterized in that**
a humidity sensor is used whose installation location is in the vicinity of the air outlet openings of the motor vehicle.

2. Method for heating windows (2, 3, 4, 5) of a motor vehicle (1), wherein the air humidity in the passenger compartment of the motor vehicle is used to determine and control the heating power by employing a humidity sensor of a humidity control system, and only moisture sensors which are installed at the rear are used to measure the humidity in the passenger compartment of the vehicle,
**characterized in that**
a humidity sensor is used whose installation location is in the vicinity of the air outlet openings of the motor vehicle.

3. Method according to Claim 1 or 2,
**characterized in that**
during the heating of the respective window only as much electrical energy is fed as is actually required to prevent the window from misting up.

4. Method according to one of Claims 1 to 3,
**characterized in that**
characteristic diagrams or calculations are used to determine the heating power.

5. Method according to Claim 4,
**characterized in that**
these characteristic diagrams are determined in vehicle tests by means of a suitable test routine.

6. Humidity control system in a motor vehicle having a humidity sensor, in particular for use in a method according to one of the preceding claims, wherein just one humidity sensor is installed at the rear in order to measure the humidity in the passenger compartment of the vehicle,
**characterized in that**
the installation location of a humidity sensor is in the vicinity of the air outlet openings of the motor vehicle.

7. Humidity control system in a motor vehicle having a humidity sensor, in particular for use in a method according to one of the preceding claims, wherein humidity sensors are installed only at the rear in order to measure the humidity in the passenger compartment of the vehicle,
**characterized in that**
the installation location of a humidity sensor is in the vicinity of the air outlet openings of the motor vehicle.

## Revendications

1. Procédé de chauffage de vitres (2, 3, 4, 5) d'un véhicule automobile (1), dans lequel, pour déterminer et réguler la puissance de chauffage, l'humidité de l'air dans l'habitacle du véhicule automobile est utilisée en employant un capteur d'humidité d'une régulation d'humidificateur, seulement un capteur d'humidité monté à l'arrière étant utilisé pour la mesure de l'humidité dans l'habitacle du véhicule,
**caractérisé en ce que**
l'on utilise un capteur d'humidité dont l'emplacement de montage est à proximité des ouvertures de ventilation du véhicule automobile.

2. Procédé de chauffage de vitres (2, 3, 4, 5) d'un véhicule automobile (1), dans lequel, pour déterminer et réguler la puissance de chauffage, l'humidité de l'air dans l'habitacle du véhicule automobile est utilisée en employant un capteur d'humidité d'une régulation d'humidificateur, des capteurs d'humidité montés seulement à l'arrière étant utilisés pour la mesure de l'humidité dans l'habitacle du véhicule,
**caractérisé en ce que**
l'on utilise un capteur d'humidité dont l'emplacement de montage est à proximité des ouvertures de ventilation du véhicule automobile.

3. Procédé selon la revendication 1 ou 2,
**caractérisé en ce que**
lors du chauffage de chaque vitre, on alimente uniquement suffisamment d'énergie électrique pour éliminer effectivement la buée.

4. Procédé selon l'une quelconque des revendications 1 à 3,
**caractérisé en ce que**
l'on emploie des champs caractéristiques ou des calculs pour déterminer la puissance de chauffage.

5. Procédé selon la revendication 4,
**caractérisé en ce que**
ces champs caractéristiques sont déterminés au cours d'essais du véhicule au moyen d'un programme d'essai approprié.

6. Régulation d'humidificateur dans un véhicule automobile comprenant un capteur d'humidité, notamment pour l'application dans un procédé selon l'une quelconque des revendications précédentes, seulement un capteur d'humidité étant monté à l'arrière pour la mesure de l'humidité dans l'habitacle du véhicule,
**caractérisée en ce que**
l'emplacement de montage d'un capteur d'humidité est à proximité des ouvertures de ventilation du véhicule automobile.

7. Régulation d'humidificateur dans un véhicule automobile comprenant un capteur d'humidité, notamment pour l'application dans un procédé selon l'une quelconque des revendications précédentes, des capteurs d'humidité étant montés seulement à l'arrière pour la mesure de l'humidité dans l'habitacle du véhicule,
**caractérisée en ce que**
l'emplacement de montage d'un capteur d'humidité est à proximité des ouvertures de ventilation du véhicule automobile.
